# EUROPEAN PATENT SPECIFICATION

(11) **EP 1 718 142 B1**
(45) Date of publication and mention of the grant of the patent: **24.10.2012**
(21) Application number: 04714292.2
(22) Date of filing: 25.02.2004
(51) Int. Cl.: A01K 11/00

(54) **TAMPER-PROOF TAG**
MANIPULATIONSSICHERE IDENTIFIKATIONSMARKE
ETIQUETTE INFALSIFIABLE

(43) Date of publication of application: 08.11.2006
(73) Proprietor: Agrobiogen GmbH Biotechnologie, Larezhausen, 86567 Hilgertshausen (DE)
(72) Inventor: BREM, Gottfried Agrobiogen GmbH Biotechnologie, 86567 Hilgertshausen (DE); BERNER, Alexander Agrobiogen GmbH Biotechnologie, 86567 Hilgersthausen (DE)
(74) Representative: Emmel, Thomas
(86) International application number: PCT/EP2004/001869
(87) International publication number: WO 2005/079562

(56) References cited:
- WO-A-02/39810
- WO-A-2004/010773
- FR-A- 2 831 390

## Description

The present invention relates to a device for marking an individual and concurrently collecting a sample therefrom. Once attached to the individual, the device cannot be removed without leaving substantial signs of manipulation, so that that the association of the device to a given individual may not be altered without being noticed.

Farmer's animals are normally branded by affixing to an ear thereof a tag carrying identification means, such as an numeric or alphanumeric identification code in plain writing and/or encoded in a 1D barcode or 2D Code, or an Electronic Identification Device (e.g. RFID), which identification has been assigned to the animal by a central authority. This allows tracking the animals throughout its lifetime, their move from one location to another and eventually to a slaughter-house, and was inter alia designed to avoid spread of diseases or to safeguard the quality of races. When attaching such a tag to a newborn animal, the farmer has to indicate all of the details of the newborn to the central authority, such as the location of the farm, the parents of the animal etc., which authority assigns a number, imprinted into the tag, to the animal. The association of animal to the tag number is managed in the central authority.

Since animals often loose a tag on the field by e.g. rubbing their heads against some hard material present there, to both of their ears tags are affixed, so that even after unwanted removal of one tag the animal may still be reliably identified. The presence of two identical tags is also meant to prevent forgery.

In the past it came to public attention that even though two tags are present on an animal, both of them have sometimes been removed and attached to another animal, in most cases for commercial purposes. Instances, which have entered public cognisance, were in particular changes of ear tags of cows to either avoid BSE-assays, prescribed for animals, the age of which exceeds 24 months, or to simply attach the tag, taken from a dead animal of high commercial value (e.g. a particular race) to a live animal of lower commercial value. These possibilities of deception created a lot of concern among farmers and above all among consumer, that eventually could not be certain, whether or not a particular animal or a product thereof has e.g. been tested for BSE or not and therefore could be considered safe.

None of the devices presently available are actually tamper-proof themselves, since all or parts of the devices may be removed from the original site in the animal without substantial signs of manipulation or even destruction thereof. This is mainly due to the fact that the tags are made of polyurethane, a material that exhibits a particular flexibility/softness, required to meet the conditions in the field. In particular, the material of the tag must allow bending and a flexibility in the ear of the animal so as to avoid breaking upon contact with solid surfaces (e.g. the rod of a fence) or establishment of an inflammation due to rubbing within the ear. A concurrent disadvantage of this field requirement resides, however, in that the material is also too soft to withstand the spike from being pulled out of the female part without substantial destruction.

In order to solve such problems EP 1 088 212 proposes a device and a method for collecting and initially preparing tissue, blood and other samples of nucleic acid containing cells or cell components, for molecular testing. According to an embodiment the device is represented by a modified ear tag, which during attachment to the animal allows a simultaneous collection of a sample of the ear. The ear tag described has a conventional identification number, assigned by a central authority, and is attached to the animal also in a conventional way. The ear tag comprises a sample collection container that has the same identification number as the ear tag, so that the sample contained in the container may be assigned via the number to the animal. This device, therefore, provides a means to prevent forgery, since even in case a tag has been exchanged, the animal may still be identified via a genetic assay by e.g. comparing genomic data of the sample collected and stored in the container when attaching the tag to the animal, with the genomic data of the animal, carrying the tag. A similar device disclosed in WO 2004/010773 A.

Another improved device is described in EP 01 219 169, wherein the female counterplate of the ear tag is designed such that it does not comprise an opening for the spike to go through. This design improves the sampling success rate, in that it provides a counter-surface for the spike during the intrinsic punch-out process of the tissue sample (which the tissue of an ear of a newborn does not provide under normal circumstances).

Even though the devices referred to above provide some sort of protection against forgery, a tampering may only be determined by means of an assay performed on the biological material removed from the animal when attaching the tag, and a biological material taken from the respective animal. These kind of assays are not performed routinely, but in specific cases only, so that it is a prerequisite for selecting a specific animal for an assay that the attending personal recognizes that the device has been manipulated.

Hence there is a need in the art to overcome the shortcomings of the prior art and to provide a tamper-proof tag that may be attached to an individual and that may not be detached therefrom without showing substantial signs of manipulation and/or destruction, and with which simultaneously a sample of the individual to be marked may be collected.

The above problem has been solved by providin a novel device for marking individuals according to claim 1.

In the figures,

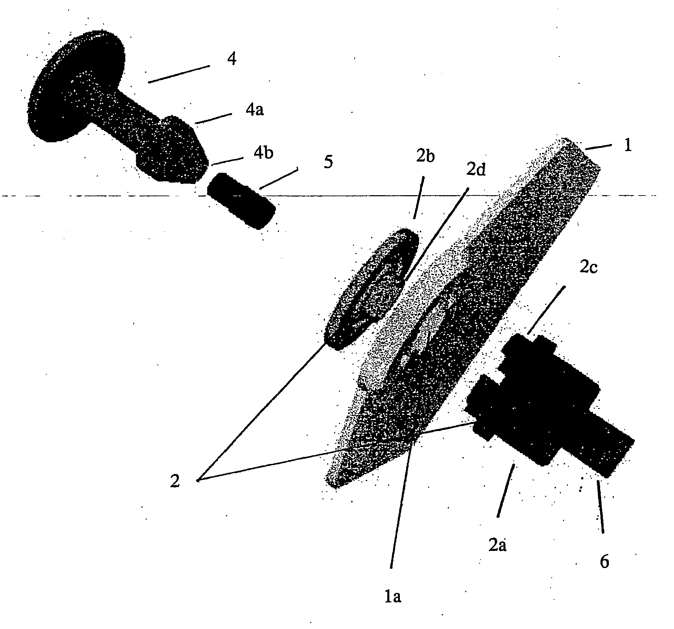

Fig. 1 shows the female part of a tag 1 with its through opening 1 a, the chamber 2 comprising a chamber-part 2a and a ring-part 2b, , the spike 4 and a device 5 for taking a sample and closing the container 6, into which the tissue sample is to be transferred during collection;
Fig.2 shows the same arrangement as shown in Fig. 1 from another perspective;

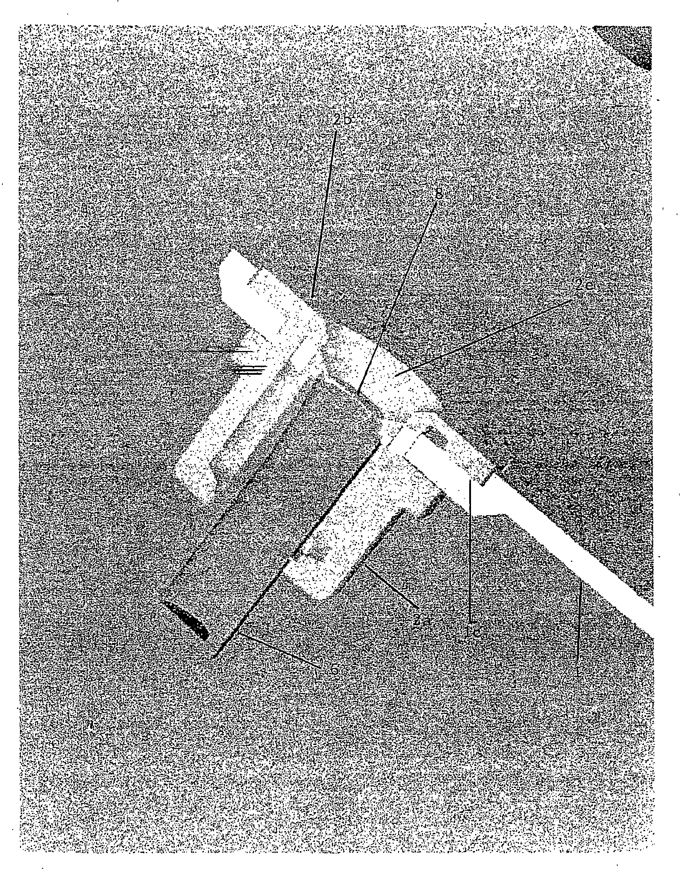

Fig. 3 shows the assembly of the female part of the tag (1), the chamber (2) and ring-part 2b, and the container for collecting a tissue sample;
Fig. 4 shows the assembly of Fig. 3 from another perspective, highlighting, that the container (6) is closed by a lid;
Fig. 5 shows the assembly of Fig. 3, wherein the spike 4 together with the device 5 for taking a sample and closing the container 6 has been has been inserted into the chamber 1 taking along a tissue sample 7;

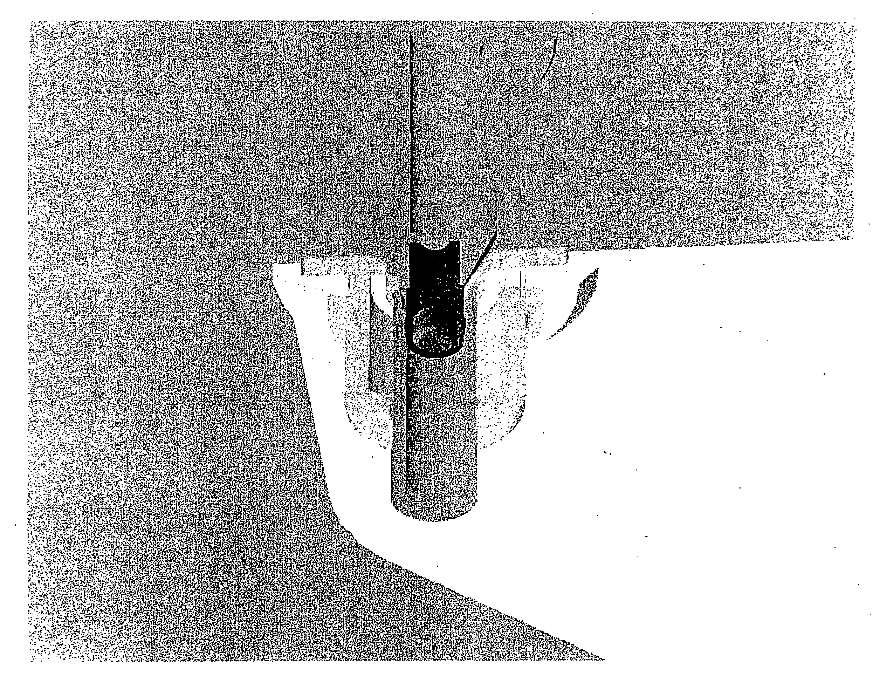

Fig. 6 shows the arrangement of Fig. 5 from another perspective;
Fig. 7 shows the arrangement of Fig. 5 from still another perspective; wheren the spike is now, with its head 4 and widest circumference entering the through opening of the ring-part 2b;
Fig. 8 shows the arrangement of Fig. 5 after the spike with its head having passed the through opening in the female part of the tag 1 and the ring-part 2b;
Fig. 9 shows the arrangement of Fig. 8 from another perspective;
Fig. 10 shows the arrangement of Fig. 5, wherein the container (6), closed by the device (5) for taking a sample and closing the container (6) and containing a sample (7) has been removed from the tag arrangement;

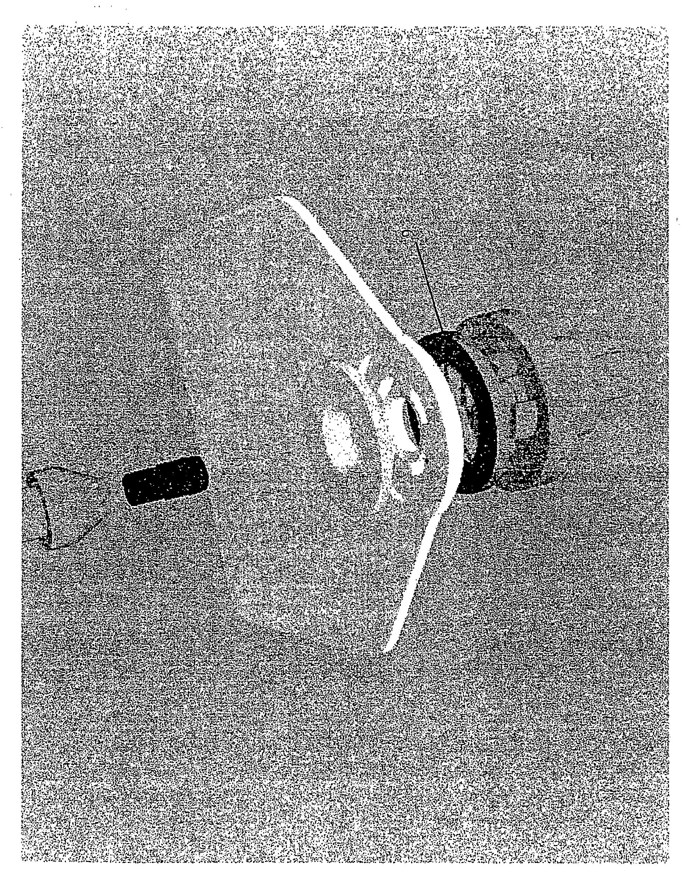

Fig. 11 shows the arrangement of Fig. 1, wherein between the chamber and the female tag an identification device (8) in form of a ring 9 harboring a chip, has been provided;

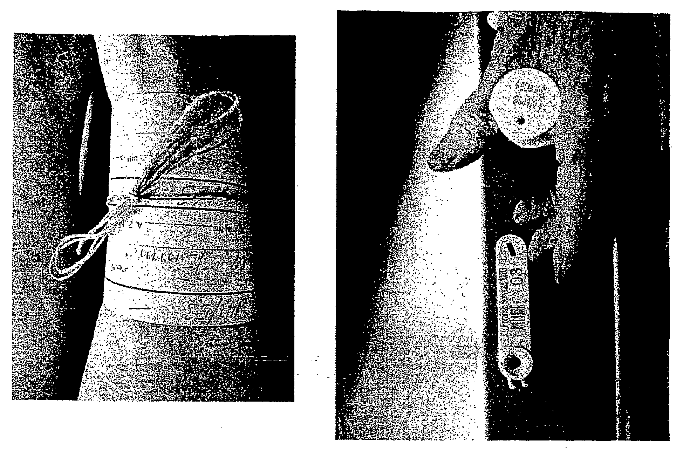

Fig. 12 shows an identification of a deceased marked in a conventional way and with a device according to the present invention.

In the context of the present invention the term spike shall designate a spike as is exemplifed e.g. in the figures or a spike to which a plate essentially identical in form and shape of the female plate is attached. The spike comprises a head part and a rear part. The head part is formed with a front section the diameter of which grows in a conical manner to a maximum, the diameter of which essentially correspond to the diameter of the space provided by the chamber, and then regresses in a stepwise manner to a diameter, which essentially corresponds to the diameter of the through opening of the female part of the tag or the ring of the chamber, respectively. The head part of the spike also comprises at its front end means to receive the sample collecting means. The rear part of the spike is represented by a rod, that has essentially the same diameter as the through opening of the female part of the tag and that has at the end opposing the-head part means for preventing the rod from passing through the tissue.

In the context of the present invention individual shall designate either non-human animals, such as cattle, e.g. ungulates, or deceased animals, including humans.

In the context of the present invention the term animal is meant to designate non-human animals, such as cattle, e.g. sheep, goats, pigs, horses, rabbits, mice, game animals, buffalos, pets etc..

According to the present invention a device is provided for marking and concurrently collecting a sample from an individual comprising, a spike 4, and a female part of a tag 1, comprising a tag part containing a through opening 1 a, a chamber 2 including a chamber-part 2a and a ring-part 2b arranged on opposite sides of a through opening 1a of the female part of the tag 1, wherein the chamber-part 2a and the ring-part 2b both are formed of a rigid material. In addition the spike 4 is at its front end 4b designed to receive means for collecting a sample and closing a container 5, and is designed such that its outer diameter increases from the front end to a maximum and regresses in a step to an outer diameter essentially corresponding to an outer diameter of the ring-part 2a, to form a head 4a, with the chamber 2 preventing the spike head 4a from being removed from the female part of a tag once introduced.

In particular, the present invention resides in providing the through hole 1a of the female part of the tag 1 with sufficient stiffness to prevent the spike 4 from being repulled without signs of manipulation/destruction of the respective part or all of the tag, while at the same time allowing the tag to maintain its conventional softness and enabling the attendant personal to collect samples during attachment of the tag to the individual.

In order to achieve the desired objective the present invention provides a modified tag for marking individuals, wherein the female part 1 of the tag comprises at the through opening thereof 1a a chamber 2 fixed to the female part and adapted to house the container 6 for collecting a sample 7, and adapted to receive the head of spike 4a in a manner, that prevents withdrawal of the spike 4 from the chamber 2.

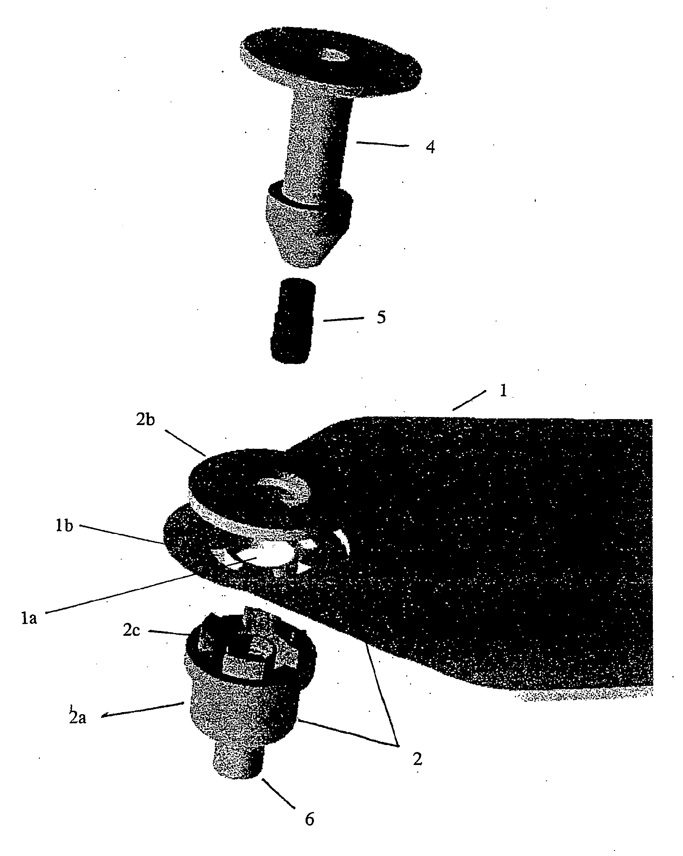

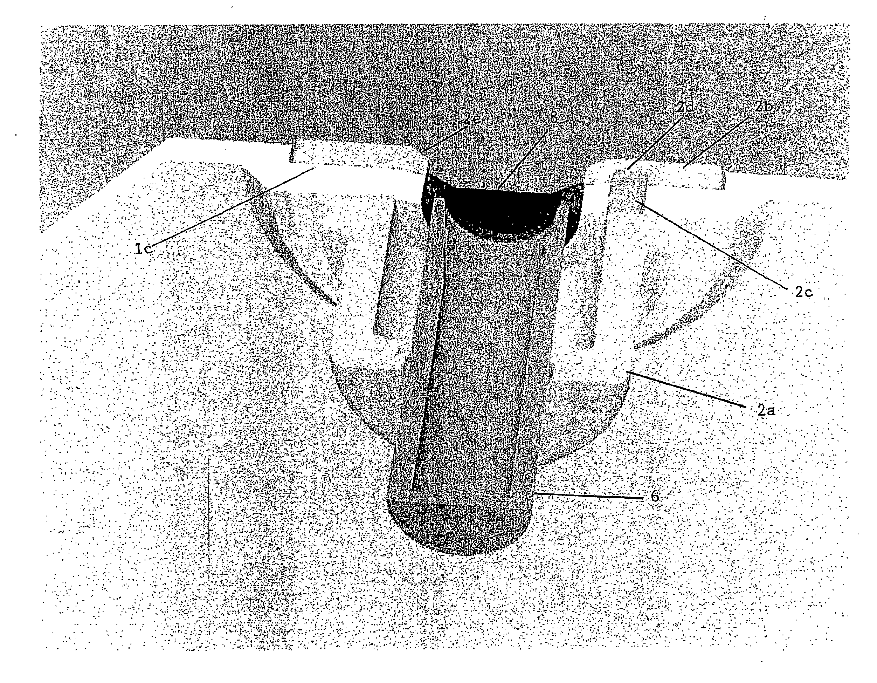

The chamber 2 is normally assembled of two parts, which in the final arrangement are linked together in a manner that prevents separation thereof. In particular the chamber 2 may be constituted of a chamber 2a and a ring-part 2b wherein the ring-part 2b is arranged on the female part of the tag 1 on the side facing the counterplate in the final assembly. Such an assembly is exemplarily shown in Fig. 2. The chamber-part 2a may include protrusions 2c, that may be introduced into respective recessions or through openings 1b manufactured in the female tag 1 and which may also extend into recessions 2d optionally present in the ring-part 2b to receive the said protrusions 2c and to allow a positioning of the ring-part 2b on the female part of the tag 1. Alternatively and in addition the female tag 1 may also include a recession 1c at the location of the through-opening 1a for receiving the ring-part 2b, which allows a positioning of the ring-part 2b. Fig. 4 shows the ring-part 2b being arranged in a recession 1c of the female tag 1, with a protrusion 2c of the chamber-part 2a extending through openings in the female tag 1 and into a recession 2d formed in the ring-part 2b.

According to the invention, the chamber-part 2a and the ring-part 2b are both produced of a material, which prevents manipulation on the tag without causing unavoidable damages or destruction thereof, so that it may easily be seen that these parts have been manipulated with and that the parts of the tag may be separated such that they could be re-used. Such material is, without limiting it thereto, selected from any material exhibiting a sufficient stiffness or rigidness, withstanding a force exerted, when trying to pull the head 4a of the spike 4 out of the chamber 2. Exemplary materials are e.g. metal or preferably plastics. The parts 2a and 2b are in the final assembly linked to each other in a manner that prevents separation thereof, such as e.g. engagement via hooks. Plastics has the advantage, that both, the ring-part 2b and the chamber-part 2a may be linked by conventional means, such as ultrasonic welding or chemical gluing, so that they may fixedly be linked with each other. A material, that proved to be easily manageable is polyamide, since it may without difficulty be welded via ultrasonic waves during manufacture of the tag, without detrimental effect on the material of the tag.

According to a preferred embodiment, the ring-part 2b may have a form which on the side facing the counterplate in the final arrangement has a conical recess 2e, so that introduction of the spike head into the opening of the ring is alleviated. On the side opposite thereto the ring may have a form 2f extending through the opening 1a in the female part of the tag 1 to contact the chamber 2a when assembled. This form is preferred, since it allows a better connection of the ring-part 2b with the chamber-part 2a, so that pulling apart the ring-part 1b and the chamber-part 2a is prevented. In addition it has been shown that such a form surprisingly ensures that the sample 7 is safely guided together with means 5 into the container 6. In addition, the ring-part 2b may also include a lid 8 that may be penetrated by means to collect a sample 5 upon use and that provides a cover for the container 6.

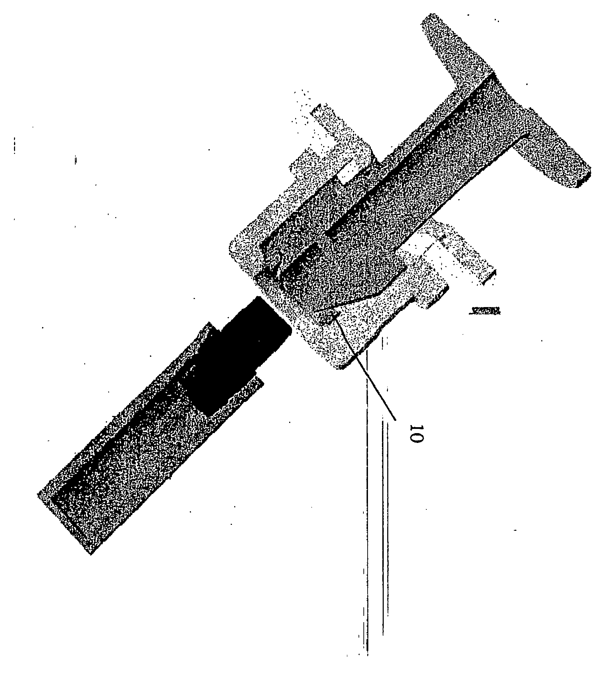

The chamber-part 2a is also designed to harbor a container 6 for receiving a sample 7 to be collected, such that the open side of the container faces the through opening 1a of the female tag 1. The container 6 is arranged in the chamber-part 1a in a manner allowing its release, once the spike 4 and the means for collecting the sample and closing the container 5 has been introduced into the chamber 2, as is e.g. shown in Fig. 10. The container 6 may be closed by a cover 8, that may be easily penetrable by the spike 4 and the device for collecting the sample and closing the container 6, respectively. The lid 8 may be an integral part of the container or may be provided as a part of the ring or may even be provided as a separate part, as is shown in Fig. 4. The lid 8 may be manufactured such that a stable punching ground during the punching process is provided on the one hand and in order to protect means in the sample collection container used for the initial preparation of the sample.

Such means are e.g. drying means for drying the sample 7 to an extent preventing the activity of enzymes that degrade DNA or RNA or proteinaceous material. The drying means are also provided for preventing humidity from penetrating the container and are selected e.g. from proteinase K, strong bases, or molecular sieve. The drying means (e.g. molecular sieve e.g. E. Merck 0.2 nm # 1.05704.0250, K 230045904 624, water absorption capacity > 20 %) may be introduced into the sample collecting container which is removably connected with the outer part of the chamber, preferably via a predetermined breaking point) but densely and to protect this from deactivation by air humidity, during assembly.

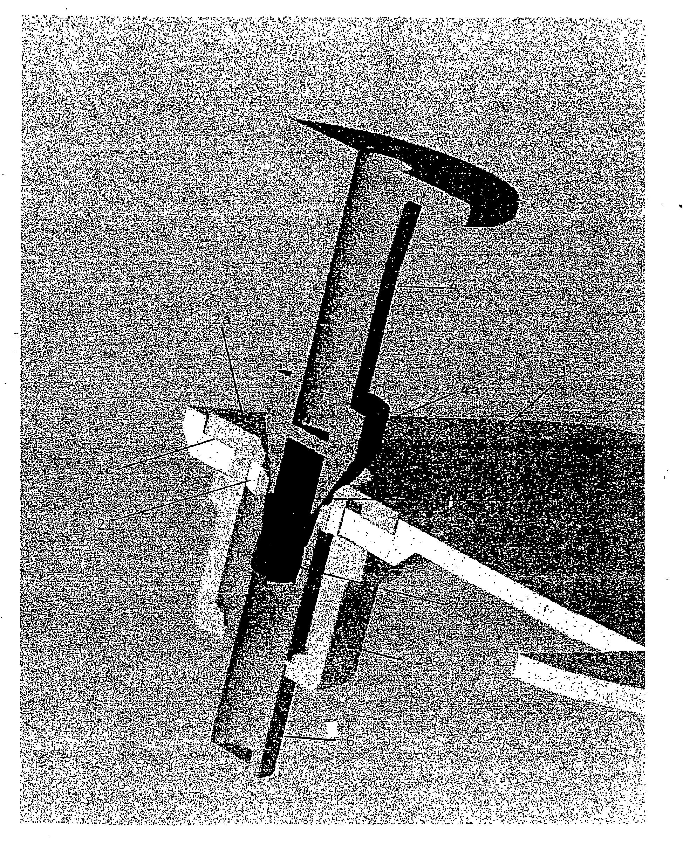

During application of the tag to an individual, the spike 4 or spike plate approaches the female part 1 of the tag as is e.g. shown in Fig. 4. The spike 4 is designed to allow arrangement of a means 5 for collecting a sample 7 and for closing the container on its front part 4b, e.g. by means of a recession formed in the spike head 4a, which allows introduction of the means 5 for collecting the sample therein. The spike head 4a enters the through-opening in the ring-part 2b, which is alleviated in that the ring has a conical part 2e formed thereon, that guides the spike containing the means for collecting the sample and for closing the container into the through-opening. Since the spike head 4a together with the means 5 for collecting a sample 7 and for closing the container 6 has gone trough a tissue, the means 5 for collecting a sample and for closing the container 6 will take along a sample 7 as is shown in Fig. 5. In Fig. 5 the means 5 for collecting the sample 7 and for closing the container 6 has already penetrated the cover 8 of the container 6 and the sample 7 has already been introduced therein. According to a preferred embodiment the ring-part 2b has laps or flat links as are known from glass recycling containers for, which flaps/flat links will be put aside, when the spike head passes the ring-part 2b. These flaps/flat links may be connected by a cover or membrane, that is destroyed, when the spike-head passes the ring-part 2b. The spike head 4a has not yet entered the chamber-part 2a. By applying more force the spike head 4a will be forced into the chamber-part 2a by passing through the ring-part 2b. This will be possible, since the ring-part 2b, even though being formed of a rigid material has an elasticity sufficient to let the head of the spike 4a pass through.

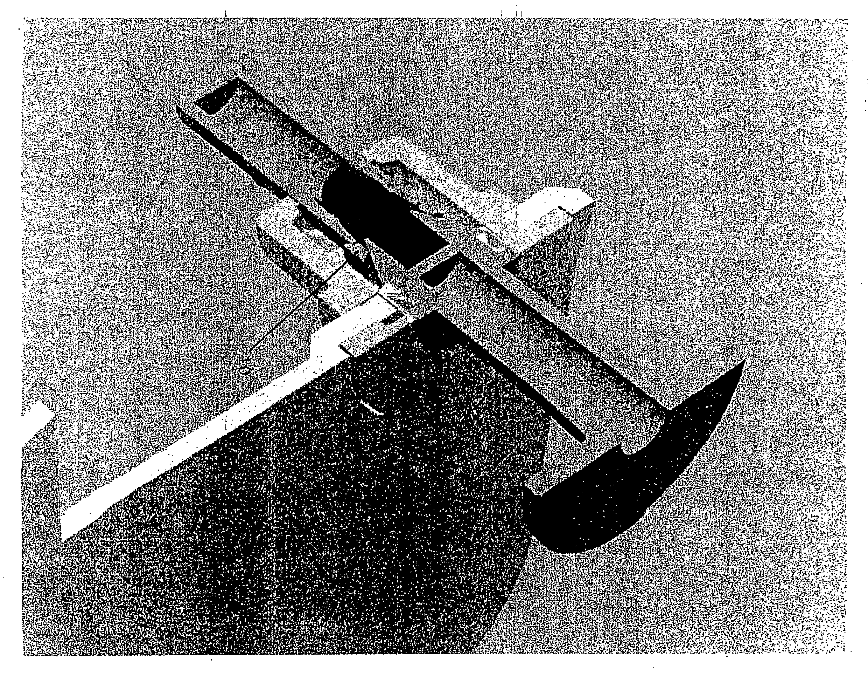

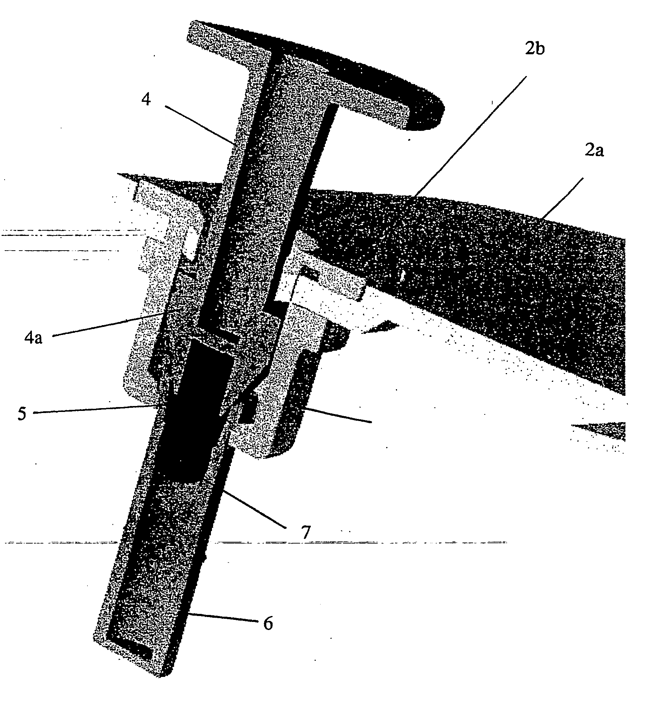

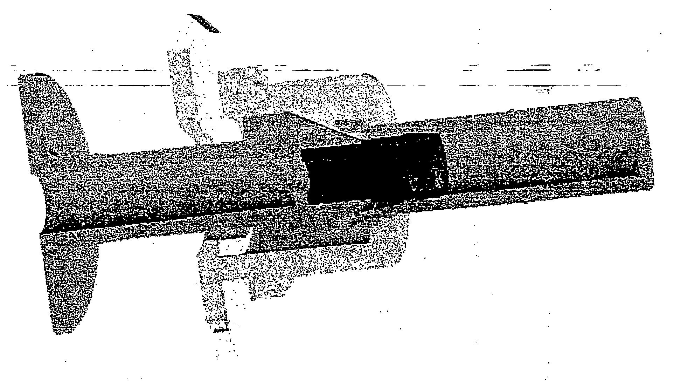

In Fig. 7 the spike head 4a has been protruded from its position shown in Fig. 5 to a position located more in the chamber where the greatest outer circumference of the spike head 4a coincides with the ring's inner circumference. When pushing the spike further forward the situation as shown in Figs. 8 - 10 prevails. The spike head 4a is in the chamber-part 2a, with its greatest outer circumference located in the chamber-part 2a. The stepwise regression of the outer circumference to a diameter corresponding to that of the opening 1a in the female part of the tag 1 and the ring-part 2b, respectively, prevents, together with the hard material, the chamber and the ring are formed of, that the spike head 4a may be repulled without substantial destruction of the assembly.

At the same time, when being in a position as shown in Figs. 8 - 10, the spike head 4a pushes The means 5 for collecting a sample 7 and closing the container 6 forward to an extent that allows an easy detachment of the container 6, containing the sample 7 and closed by the said means 5.

In this position, the chamber 2 surrounds the shoulders and the head of the spike 4, such that it is confined in the chamber-part 2a and may neither be pushed backwards nor forwards. The ear tag is thus protected against re-use (tamper-poof). Furthermore, according to a preferred embodiment an additional ring 10 may be provided at the through opening 1a of he female part 1 of the tag at the side facing the chamber-part 2a which ring will be displaced by the head of the spike 4a when it enters the chamber-part 2a and will be pushed forward together by the head of the spike 4a to eventually rest on the bottom of the chamber-part 2a. The use of such a ring reduces the hole on the bottom of the chamber-part, when the container 6 has been removed and additionally impedes a manipulation of the spike head. It will be appreciated that in order work accordingly, the ring will be manufactured of a material, strong and rigid enough to withstand the force exerted by the had of the spike being driven forward.

As a further positive effect of this arrangement the spike 4 is very easily turnable in the chamber-part 2a which results in that the animals cannot rip out the ear tags so easily, i.e. do not hang on any objects.

Furthermore, parts of the chamber may be designed such that a transponder of a RFID or another Electronic Identification Device may be inserted and surrounded when connecting the chamber-parts and thus fixed reliably on the tag and protected before connecting the both parts.

An additional electronic labelling with the same identity number may also be inserted in the sample collecting container 6 so that the sample 7 is also electronically labelled. In addition, Electronic Identification Devices or parts thereof may be inserted in the female and male part of the tag affecting each other such that when removing one part of the ear tag the other Electronic Identification Device (or part thereof) does not emit a signal any longer, i.e. sends a disruptive signal or emits a signal with an extremely altered range. The use of 1bit transponder is also possible to have a control function with high automation.

The sample collecting container 6 is located in the chamber directly underneath the punching ground. Punching ground and container form a "guidance unit" already before the sample penetrates through punching ground or in the meantime.

An additional tamper evidence feature is laser labelling (sealing) at the border surface of the rigid and the flexible ear tag components; especially suitable at previous elastic of plastic distortion, as the original state cannot be restored when separating the two parts.

In addition the present device may also be used in mortuaries, where deceased bodies are normally marked with a paper and a cord. Such conventional arrangement may often disconnect, due to handling, so that an association of the data to a given corpse may not be realized. According to the present invention the tag is fixedly associated with the deceased body, so that a detachment cannot take place without signs of manipulation.

## Claims

1. A device for marking and concurrently collecting a sample from an individual comprising,
a spike (4);
and a female part of a tag (1) comprising
a tag part containing a through opening(1a),
a chamber (2) including a chamber-part (2a) and a ring-part (2b) arranged on opposite sides of a through opening(1a) of the female part of the tag (1),
wherein the spike (4) is at its front end designed to receive means (5) for collecting a sample and closing a container (6), and is designed such that its outer diameter increases from the front end to a maximum and regresses stepwise to an outer diameter essentially corresponding to an inner diameter of the ring-part (2a), to form a head (4a),
with the chamber (2) preventing the spike from being removed from the female part 1 of a tag once introduced **characterized in that** the chamber-part (2a) and the ring-part (2b) are linked with each other in a manner that prevents separation thereof and both are formed of a rigid material exhibiting a sufficient stiffness to withstand forces exerted when trying to pull the head (4a) of the spike out of the chamber (2).

2. The device according to claim 1, wherein the either or both of the chamber-parts (2a, 2b) are formed of metal or plastics.

3. The device according to claim 2, wherein the plastics is polyamide.

4. The device according to claim 2 or 3, wherein the chamber-part (2a) and the ring-part (2b) are connected with each other via ultrasonic welding.

5. The device according to any of the preceding claims, wherein the ring-part (2b) is has a conical area (2e) surrounding the through opening, alleviating introduction of the spike head (4a).

6. The device according to any of the preceding claims, wherein the ring-part (2b) has a form(2f), extending through the through opening(1a) of the female part of the tag (1) to contact the chamber-part (2a) of the chamber (2).

7. The device according to any of the preceding claims, wherein the chamber-part (2a) has protrusions (2c) to extend into respective recessions or through openings(1b) formed in the female part of the tag (1).

8. The device according to claim 7, wherein the protrusions (2c) extend through respective openings (1b) in the female part of the tag (1) and into respective recessions (2d) formed in the ring-part (2b) of the chamber (2).

9. The device according to any of the preceding claims, wherein the female part of the ear tag (1) has a recess (1c) arranged around the through opening (1a) and designed to receive the ring-part (2b) of the chamber (2).

10. The device according to any of the preceding claims, wherein the device is marked with a numeric or alphanumeric code in plain writing and/or a barcode and/or a 2D Code or an Electronic Identification Device.

## Patentansprüche

1. Vorrichtung zur Markierung und gleichzeitigen Entnahme einer Probe von einem Individuum mit,
einem Dorn (4);
und einem weiblichen Teil einer Marke (1) mit
einem Markenteil, der eine durchgehende Öffnung (1a) enthält,
einer Kammer (2) mit einem Kammer-Teil (2a) und einem Ring-Teil (2b), die jeweils auf entgegen liegenden Seiten der durchgehenden Öffnung (1a) des weiblichen Teiles der Marke (1) angeordnet sind,
wobei der Dom (4) an seinem vorderen Ende zur Aufnahme von Einrichtungen (5) zur Entnahme einer Probe und zum Verschließen eines Behälters (6) ausgebildet ist und so gestaltet ist, dass sein äußerer Durchmesser von dem Frontende aus bis zu einem Maximum ansteigt und schrittweise auf einen äußeren Durchmesser zurückgeht, der im Wesentlichen einem inneren Durchmesser des Ring-Teiles (2a) entspricht, um einen Kopf (4a) auszubilden,
wobei die Kammer (2) den Dorn daran hindert, aus dem weiblichen Teil (1) der Marke entfernt zu werden, nachdem er eingesetzt wurde, **dadurch gekennzeichnet, dass** der Kammer-Teil (2a) und der Ring-Teil (2b) in einer Weise miteinander verbunden sind, dass ihre Trennung verhindert wird und beide aus einem starren Material gebildet sind, das eine ausreichende Steifheit aufweist, um Kräften zu widerstehen, die ausgeübt werden, wenn versucht wird, den Kopf (4a) des Doms aus der Kammer (2) herauszuziehen.

2. Vorrichtung nach Anspruch 1, wobei eines oder beide der Kammer-Teile (2a, 2b) aus Metall oder Kunststoff gebildet sind.

3. Vorrichtung nach Anspruch 2, wobei der der Kunststoff Polyamid ist.

4. Vorrichtung nach Anspruch 2 oder 3, wobei der der Kammer-Teil (2a) und der Ring-Teil (2b) miteinander über Ultraschallverschweißung verbunden sind.

5. Vorrichtung nach einem der vorhergehenden Ansprüche, wobei der Ring-Teil (2b) einen konischen Bereich (2e) aufweist, der die durchgehende Öffnung umgibt und das Einsetzen des Dornkopfes (4a) erleichtert.

6. Vorrichtung nach einem der vorhergehenden Ansprüche, wobei der Ring-Teil (2b) eine Form (2f) aufweist, die sich durch die durchgehende Öffnung (1a) des weiblichen Teils der Marke (1) hindurch erstreckt, um den Kammer-Teil (2a) der Kammer (2) zu kontaktieren.

7. Vorrichtung nach einem der vorhergehenden Ansprüche, bei der der Kammerteil (2a) Vorsprünge (2c) aufweist, die sich in entsprechende Vertiefungen oder durchgehende Öffnungen (1b) erstrecken, die in dem weiblichen Teil der Marke (1) ausgebildet sind.

8. Vorrichtung nach Anspruch 7, bei der die Vorsprünge (2c) sich durch entsprechende Öffnungen (1b) in den weiblichen Teil der Marke (1) und in dem Ring-Teil (2b) ausgebildete respektive Vertiefungen (2d) der Kammer (2) erstrecken.

9. Vorrichtung nach einem der vorhergehenden Ansprüche, bei der der weibliche Teil der Ohrmarke (1) eine Vertiefung (1c) aufweist, die um die durchgehende Öffnung (1a) ausgebildet und so gestaltet ist, dass sie den Ring-Teil (2b) der Kammer (2) aufnehmen kann.

10. Vorrichtung nach einem der vorhergehenden Ansprüche bei der die Vorrichtung mit einem numerischen oder alphanumerischen Code in Klarschrift und/oder einem Barcode und/oder einem 2D-Code oder einer elektronischen Identifizierungseinrichtung markiert ist.

## Revendications

1. Dispositif de marquage individuel permettant de prélever simultanément un échantillon, comprenant
une broche (4);
et une partie femelle d'une plaquette (1) comprenant
une pièce formant plaquette dotée d'une perforation (1a),
un logement (2) comportant une pièce formant cavité (2a) et une pièce annulaire (2b) respectivement agencées de part et d'autre de 1a perforation (1a) de 1a partie femelle de 1a plaquette (),
1a broche (4) étant, à son extrémité frontale, conçue pour recevoir un organe (5) destiné à prélever un échantillon et obturer un conteneur (6), et conformée de façon à ce que son diamètre extérieur croisse de l'extrémité frontale vers un diamètre maximum et décroisse progressivement vers un diamètre extérieur correspondant essentiellement à un diamètre intérieur de 1a pièce annulaire (2a) pour former une tête (4a),
le logement (2) assurant que 1a broche ne puisse être retirée de 1a partie femelle 1 d'une plaquette après y avoir été introduite, **caractérisé en ce que** 1a pièce formant cavité (2a) et 1a pièce annulaire (2b) sont reliées l'une à l'autre de façon à ne pas pouvoir être séparées, les deux pièces étant réalisées en un matériau non flexible présentant une rigidité suffisante pour résister aux forces qui s'exercent sur elles lorsqu'on tente d'extraire 1a tête (4a) de 1a broche hors du logement (2).

2. Dispositif selon 1a revendication 1, l'une ou l'autre des pièces (2a, 2b) du logement ou les deux pièces étant réalisées en métal ou en matières plastiques.

3. Dispositif selon 1a revendication 2, les matières plastiques étant du polyamide.

4. Dispositif selon les revendications 2 ou 3, 1a pièce formant cavité (2a) et 1a pièce annulaire (2b) étant reliées l'une à l'autre par soudage ultrasonique.

5. Dispositif selon l'une des revendications précédentes, 1a pièce annulaire (2b) étant dotée d'une zone conique (2e) entourant 1a perforation et facilitant l'introduction de 1a tête de 1a broche (4a).

6. Dispositif selon l'une des revendications précédentes, 1a pièce annulaire (2b) ayant une forme (2f) prolongée à travers 1a perforation (1a) de 1a partie femelle de 1a plaquette (1) pour entrer en contact avec 1a pièce formant cavité (2a) du logement (2).

7. Dispositif selon l'une des revendications précédentes, 1a pièce formant cavité (2a) ayant des saillies (2c) s'engageant dans des encoches correspondantes ou des perforations (1b) réalisées dans 1a partie femelle de 1a plaquette (1).

8. Dispositif selon 1a revendication 7, les saillies (2c) traversant des ouvertures correspondantes (1b) dans 1a partie femelle de 1a plaquette (1) pour se loger dans des encoches correspondantes (2d) formées dans 1a pièce annulaire (2b) du logement (2).

9. Dispositif selon l'une des revendications précédentes, 1a partie femelle de 1a plaquette (1) pour oreille présentant un évidement (1c) autour de 1a perforation (1a) et étant conformée de façon à accueillir 1a pièce annulaire (2b) du logement (2).

10. Dispositif selon l'une des revendications précédentes, le dispositif étant marqué d'un code numérique ou alphanumérique inscrit en clair et/ou d'un code barres et/ou d'un code 2D ou identifié par un dispositif d'identification électronique.
